# EUROPÄISCHE PATENTSCHRIFT

(11) **EP 2 552 743 B1**
(45) Veröffentlichungstag und Bekanntmachung des Hinweises auf die Patenterteilung: **09.11.2016**
(21) Anmeldenummer: 11709691.7
(22) Anmeldetag: 15.03.2011
(51) Int. Cl.: B60N 2/44, B60N 2/42, B60N 2/427, B60N 2/02

(54) **VERFAHREN UND VORRICHTUNG ZUM SCHÜTZEN UND HALTEN EINES INSASSEN SOWIE EINE AUSWERTE- UND STEUEREINHEIT FÜR EINE SCHUTZ- UND HALTEVORRICHTUNG**
METHOD AND DEVICE FOR PROTECTING AND RETAINING A PASSENGER, AND EVALUATION AND CONTROL UNIT FOR A PROTECTION AND RETENTION DEVICE
PROCÉDÉ ET DISPOSITIF POUR LA PROTECTION ET LE MAINTIEN D'UN OCCUPANT AINSI QU'UNITÉ D'ÉVALUATION ET DE COMMANDE POUR UN DISPOSITIF DE PROTECTION ET DE MAINTIEN

(30) Priorität: 26.03.2010 DE 102010003315
(43) Veröffentlichungstag der Anmeldung: 06.02.2013
(73) Patentinhaber: Robert Bosch GmbH, 70442 Stuttgart (DE)
(72) Erfinder: FREIENSTEIN, Heiko, 71263 Weil Der Stadt (DE); KOEHLER, Armin, 74343 Sachsenheim (DE)
(86) Internationale Anmeldenummer: PCT/EP2011/053874
(87) Internationale Veröffentlichungsnummer: WO 2011/117110

(56) Entgegenhaltungen:
- DE-A1-102008 001 506
- US-A1- 2005 127 645
- US-B1- 6 209 908

## Beschreibung

### Stand der Technik

Die vorliegende Erfindung betrifft ein Verfahren zum Halten eines Fahrzeuginsassen in einem Fahrzeugsitz gemäß Anspruch 1, eine Auswerte- und Steuereinheit für eine Schutz- und Haltevorrichtung gemäß Anspruch 4 und eine Schutz- und Haltevorrichtung zum Schutz eines Insassen in einem Fahrzeugsitz gemäß Anspruch 6 sowie ein Computerprogramm und ein Computerprogrammprodukt.

Heutige Seitenstrukturen von Fahrzeugen lassen bei einem Seitenaufprall ein erhebliches Eindringen von Teilen der Seitenstruktur in das Fahrzeuginnere zu. Der Insasse des Fahrzeugs kann dabei durch einen Seitenairbag geschützt werden. Bei einem herkömmlichen Fahrzeug wird zudem die Fahrgastzelle für den Seitenaufprall so stabil wie möglich ausgelegt. Dies führt dazu, dass nur ein sehr begrenzter Raum zur Verfügung steht, um die Energie des Seitenaufpralls abzubauen.

Um einen größtmöglichen Schutz für die Insassen bei einem Crash sicherzustellen, werden im Stand der Technik oftmals Airbags als Frontalairbag, Seitenairbag oder Kopfairbag eingesetzt. Diese Airbags funktionieren aber nur dann optimal, wenn sich der Fahrzeuginsasse in einer vorbestimmten Position befindet und durch die beim und unmittelbar vor dem Unfall auftretenden Kräfte nicht aus dieser Position gebracht wird. Um den Insassen in dieser Position zu halten wird oftmals ein Sicherheitsgurt verwendet, der den Fahrzeuginsassen auf der entsprechenden vorbestimmten Position im Fahrzeugsitz halten soll. Dabei ist jedoch anzumerken, dass dieser Sicherheitsgurt, der meist als 3-Punkt-Sicherheitsgurt ausgelegt ist, einen großen Bereich des Oberkörpers abgedeckt und diesen somit fixiert, allerdings ist im Falle eines Seitenaufpralls oder bei extremen Insassen-Sitzposen die Wirksamkeit des Gurtes begrenzt. So kann der Fahrzeuginsasse bei einem Unfall beispielsweise seitlich oder nach vorne unter dem Sicherheitsgurt hindurch vom Fahrzeugsitz rutschen, so dass sich der Fahrzeuginsasse kurz nach einem Unfall nicht mehr im optimalen Wirkungsfeld des oder der Airbags befindet.

Um ein solches seitliches Wegrutschen zu verhindern wird in der WO 2004103779 A1 ein aktiver Sitz vorschlagen, der in Abhängigkeit von einer Sensorik angesteuert wird, welche beispielsweise das Umfeld des Fahrzeugs überwacht. Wird beispielsweise ein sich annäherndes Fahrzeug bzw. eine Kollision eines Objektes mit dem eigenen Fahrzeug detektiert, dann kann eine in dem Sitz verbaute Seitenwange reversibel elektrisch, pneumatisch oder durch ein Federgetriebe aufgestellt oder vorgefahren werden, um den Insassen entsprechend zu positionieren.

DE 10 2008 001506 A1 zeigt eine Einrichtung zum Personenschutz in einem Fahrzeug. Dabei kann eine Sitzpneumatik in einer Gefahrensituation als Schutzeinrichtung verwendet werden, um Insassen möglichst optimal in Abhängigkeit von der zu erwartenden Gefahrensituation im Sitz zu positionieren.

US 2005/127645 A1 beschreibt eine Sitzhebestruktur zur Verringerung einer Verletzung eines Insassen bei einer Seitenkollision eines Fahrzeugs.

US 6 209 908 B1 beschreibt ein Rückhaltemittel, das im Falle einer Kollision geeignet ist, den Insassen eines Fahrzeugs zu schützen oder in Position zu halten.

### Offenbarung der Erfindung

Das erfindungsgemäße Verfahren zum Schützen und Halten eines Insassen auf einem Insassensitz eines Fahrzeugs bei einem Unfall unter Zuhilfenahme mindestens eines Haltemittels einer Schutz- und Haltevorrichtung mit den Merkmalen des unabhängigen Patentanspruchs 1 hat demgegenüber den Vorteil, dass in Abhängigkeit von einer ermittelten aktuellen Fahrsituation ein Positionierungsimpuls erzeugt wird, welcher den Insassen weg von einer Fahrzeugseitenstruktur in Richtung Fahrzeugmitte beschleunigt, wenn eine vorgegebene

Precrashsituation erkannt wird. Eine solche gefährliche Precrashsituation wird beispielsweise erkannt, wenn der Fahrer aufgrund einer ermittelten kurzen Zeitspanne bis zum bevorstehenden Seitenaufprall oder der Fahrphysik keine Eingriffsmöglichkeiten mehr hat. Die kurze Zeitspanne kann beispielsweise durch einen auf das Fahrzeug und ein Insassenschutzsystem abgestimmten Schwellwert vorgegeben werden. Das bedeutet, dass die vorgegebene Precrashsituation beispielsweise erkannt wird, wenn eine ermittelte verbleibende Zeitdauer bis zu einem bevorstehenden Seitenaufprall den vorgegebenen Schwellwert unterschreitet.

Die erfindungsgemäße Auswerte- und Steuereinheit für eine Schutz- und Haltevorrichtung zum Schutz eines Insassen auf einem Insassensitz eines Fahrzeugs bei einem Unfall, mit den Merkmalen des unabhängigen Patentanspruchs 1 hat demgegenüber den Vorteil, dass die Auswerte- Steuereinheit in Abhängigkeit von einer aktuellen Fahrsituation einen Positionierungsimpuls erzeugt und über mindestens eine Schnittstelle an die Schutz- und Haltevorrichtung ausgibt, um den Insassen weg von einer Fahrzeugseitenstruktur in Richtung Fahrzeugmitte zu beschleunigen, wenn die Auswerte- Steuereinheit eine vorgegebene Precrashsituation erkannt hat. Zudem ist die Auswerte- Steuereinheit über mindestens eine Schnittstelle mit mindestens einer Sensoreinheit gekoppelt, um in Abhängigkeit von physikalischen Größen, welche von der mindestens einen Sensoreinheit erfasst werden, die aktuelle Fahrsituation und aktuell wirkende Beschleunigungen zu ermitteln.

Die erfindungsgemäße Auswerte- und Steuereinheit, ist zur Ausführung von Schritten des oben genannten Verfahrens und eines Computerprogramms zur Steuerung von Schritten des vorstehend genannten Verfahrens ausgebildet, wenn das Computerprogramm von der Auswerte- und Steuereinheit durchgeführt wird. Unter einer Auswerte- und Steuereinheit kann vorliegend ein elektrisches Gerät, wie beispielsweise ein Steuergerät verstanden werden, welches Sensorsignale verarbeitet und in Abhängigkeit davon Steuersignale ausgibt. Das Steuergerät kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der beschriebenen Ausführungsformen verwendet wird, wenn das Programm auf einem Steuergerät ausgeführt wird.

Die erfindungsgemäße Auswerte- und Steuereinheit kann beispielsweise in einer Schutz- und Haltevorrichtung zum Schutz eines Insassen auf einem Insassensitz eines Fahrzeugs bei einem Unfall verwendet werden, welche mindestens ein verstellbares Haltemittel aufweist, welches in Abhängigkeit von Beschleunigungen in Richtung einer Fahrzeugquerachse eine Seitenabstützung des Insassen bewirkt. Hierbei kann das mindestens eine Haltemittel in den Insassensitz integriert und im Bedarfsfall je nach Anforderung aus dem Insassensitz ausgefahren oder wieder in den Insassensitz eingefahren werden. Der von der Auswerte-Steuereinheit erzeugte Positionierungsimpuls wirkt über ein zwischen dem Insassen und der Fahrzeugseitenstruktur angeordnetes verstellbares Haltemittel auf den Insassen.

Ausführungsformen der vorliegenden Erfindung bewirken, dass ein Insasse bei einem erkannten bevorstehenden Seitenaufprall in Richtung Fahrzeugmitte bewegt wird, um in vorteilhafter Weise den seitlichen Überlebensraum zu vergrößern und den Insassen vor eindringenden Teilen der Seitenstruktur zu schützen. Zudem kann durch die Vergrößerung des seitlichen Überlebensraums ein Aufblasvorgang eines vorhandenen Seitenairbags optimiert werden. Ferner sinkt die Relativgeschwindigkeit des Insassen beim Aufprall auf die Seitenstruktur. Dies liegt an der additiven Überlagerung des Positionierungsimpulses von der Seitenstruktur weg und des Crashimpulses zur Seitenstruktur hin.

Durch die in den abhängigen Ansprüchen aufgeführten Maßnahmen und Weiterbildungen sind vorteilhafte Verbesserungen des im unabhängigen Patentanspruch 1 angegebenen Verfahrens, der im unabhängigen Patentanspruch 5 angegebenen Auswerte- und Steuereinheit und der im unabhängigen Patentanspruch 8 angegebenen Schutz- und Haltevorrichtung zum Schutz eines Insassen möglich.

Besonders vorteilhaft ist, dass der Positionierungsimpuls in Abhängigkeit von einer ermittelten lateralen Beschleunigung phasenrichtig dann erzeugt wird, wenn gegen den Positionierungsimpuls wirkende Kräfte einen vorgegebenen Schwellwert unterschreiten. Phasenrichtig bedeutet, dass der Insasse dann in Richtung Fahrzeugmitte beschleunigt wird, wenn keine Kräfte herrschen, oder wenn Kräfte herrschen, welche die Beschleunigung in Richtung Fahrzeugmitte nicht nennenswert hemmen. Dadurch kann in vorteilhafter Weise die Effektivität der erzeugten Positionierungsimpulse verbessert und eine Energieverschwendung vermieden werden, da die Positionierungsimpulse nicht gegen eine laterale Beschleunigung des Insassen wirken müssen, welche aus einem Fahrmanöver resultiert. Dies verhindert in vorteilhafter Weise, dass die erzeugten Positionierungsimpulse neutralisiert werden.

In vorteilhafter Ausgestaltung des erfindungsgemäßen Verfahrens wird der Positionierungsimpuls über ein zwischen dem Insassen und der Fahrzeugseitenstruktur angeordnetes Haltemittel auf den Insassen übergeleitet, wobei das mindestens eine Haltemittel im Fahrzeug in Abhängigkeit der ermittelten aktuellen Fahrsituation derart bewegt wird, dass der Insasse in Abhängigkeit von Beschleunigungen in Richtung einer Fahrzeugquerachse eine Seitenabstützung erfährt, und wobei vor dem Überleiten des Positionierungsimpulses durch das mindestens eine Haltemittel eine mechanische Haltekraft auf den Insassen ausgeübt wird, welcher gegen das mindestens eine Haltemittel drückt.

In vorteilhafter Ausgestaltung der vorliegenden Erfindung erzeugt die Auswerte-Steuereinheit den Positionierungsimpuls in Abhängigkeit von einer ermittelten lateralen Beschleunigung phasenrichtig, wenn gegen den Positionierungsimpuls wirkende Kräfte einen vorgegebenen Schwellwert unterschreiten, wobei die Auswerte- Steuereinheit die wirkenden Kräfte durch Auswertung der erfassten physikalischen Größen ermittelt.

In weiterer vorteilhafter Ausgestaltung der Erfindung bewirkt die Auswerte- Steuereinheit in Abhängigkeit von ermittelten Beschleunigungen in Richtung einer Fahrzeugquerachse über entsprechende Steuersingale an die mindestens eine Schutz- und Haltevorrichtung eine Seitenabstützung des Insassen.

In vorteilhafter Ausgestaltung der erfindungsgemäßen Schutz- und Haltevorrichtung ist das mindestens eine Haltemittel durch Ansteuerung von mindestens einer Antriebseinrichtung verstellbar. Die mindestens eine Antriebseinrichtung kann beispielsweise als elektrische und/oder mechanische und/oder pyrotechnische und/oder pneumatische und/oder hydraulische Einheit ausgeführt werden.

Die Antriebseinheit kann so ausgebildet sein, dass das Halteelement in einer Bewegung mit einer gekrümmten Trajektorie, insbesondere in einer sichelförmigen Bewegung in die Zielposition gebracht wird. Eine derartige Ausführungsform der vorliegenden Erfindung bietet den Vorteil, dass eine mögliche Bewegung des Fahrzeuginsassen sanft abgefangen werden kann und der Fahrzeuginsasse nicht gegen ein sich plötzlich in seinem Bewegungsweg befinden des Objekt aufprallt. Des Weiteren kann die Antriebseinheit so ausgebildet, dass das Halteelement in einer ersten Bewegung vom Insassensitz weg bewegt und in einer zweiten Bewegung wieder zum Insassensitz hin bewegt wird, wobei sich zumindest ein Teil des Halteelementes nach der zweiten Bewegung in der Zielposition befindet, um den Insassen in der vorbestimmten Position zu halten. Auch eine solche Ausführungsform der vorliegenden Erfindung ermöglicht das sanfte Abgefangen des Insassen, wobei beispielsweise zunächst das Halteelement aus einer Seitenwange der Rückenlehne des Fahrzeugsitzes in Richtung einer Fahrzeugtüre nach schräg vorne ausgefahren wird und nachfolgend in Richtung des Thorax des Fahrzeuginsassen zurückgeklappt wird. Die Antriebseinheit ist so ausgebildet, dass das Halteelement rechtzeitig in die Zielposition verbracht werden kann, um den erzeugten Positionierungsimpuls an den Insassen weiterzuleiten und somit seine optimale Schutzwirkung zu erzielen. Dies wird beispielsweise in Verbindung mit einer geeigneten Sensorik, wie beispielsweise einer Inertialsensorik oder einer vorausschauender Sensorik erreicht, über welche bereits vor Kontakt mit dem Unfallgegner die Antriebseinheit angesteuert und aktiviert werden kann.

Um eine frühzeitige Aktivierung der Haltevorrichtung zu ermöglichen, die bei einer möglichen Fehlauslösung keine unnötigen Kosten verursacht, kann auch die Antriebseinheit so ausgebildet sein, dass das Halteelement aus der Zielposition wieder in eine Ausgangsposition zurückgebracht wird. Eine derartige Ausführungsform bietet den Vorteil, dass durch das frühzeitige Ausfahren des Halteelementes zu einem Unfallzeitpunkt bereits ein guter Schutz des Insassen gegeben ist und die weiteren Sicherheitsmittel optimal wirken können. In diesem Fall kann auch die Auslösezeit für die irreversiblen Rückhaltemittel länger gewählt werden, so dass durch diese längere Zeitspanne eine sicherere Erkennung eines tatsächlich auftretenden Unfalls möglich ist. Werden nämlich die irreversiblen Rückhaltemittel zu früh und unnötig ausgelöst, entstehen deutlich höhere Kosten für die Reparatur des Fahrzeugs.

In weiterer vorteilhafter Ausgestaltung der erfindungsgemäßen Schutz- und Haltevorrichtung ist das mindestens eine Haltemittel so ausgeführt, dass es den Positionierungsimpuls im Bereich des Thorax (Oberkörper) auf den Insassen überleitet. Dieser Ansatzpunkt ermöglicht in vorteilhafter Weise einen optimalen Hebel und die Biomechanik des Menschen erlaubt hier einen positionierenden Eingriff.

Ein Ausführungsbeispiel der Erfindung ist in den Zeichnungen dargestellt und wird in der nachfolgenden Beschreibung näher erläutert.

### Kurze Beschreibung der Zeichnungen

Fig. 1 zeigt eine schematische Draufsicht eines Kraftfahrzeugs mit einem Ausführungsbeispiel einer erfindungsgemäßen Schutz- und Haltevorrichtung eines Insassenschutzsystems.
Fig. 2 zeigt eine schematische Perspektivdarstellung eines Insassen auf einem Insassensitz mit der integrierten erfindungsgemäßen Schutz- und Haltevorrichtung aus Fig. 1.
Fig. 3 zeigt eine schematische Darstellung eines erzeugten Positionierungsimpulses.
Fig. 4 zeigt ein schematisches Beschleunigungsdiagramm mit einem möglichen Reaktionsmuster der Schutz- und Haltevorrichtung aus Fig. 1 bis 3.

### Ausführungsformen der Erfindung

Ausführungsformen der vorliegenden Erfindung sollen im Falle eines Unfalls eine Schutzwirkung für einen Insassen bieten und darüber hinaus die Schutzwirkung anderer Systeme unterstützen und verbessern. Insbesondere für den Fall eines Seitenaufpralls sollen Ausführungsformen der vorliegenden Erfindung dazu beitragen, dass der Insasse von der Seitenstruktur fern gehalten und der konstruktionsbedingt vorgesehene Überlebensraum vergrößert wird, so dass alle Rückhalte- und Sicherheitssysteme ihre Wirkung optimal entfalten können.

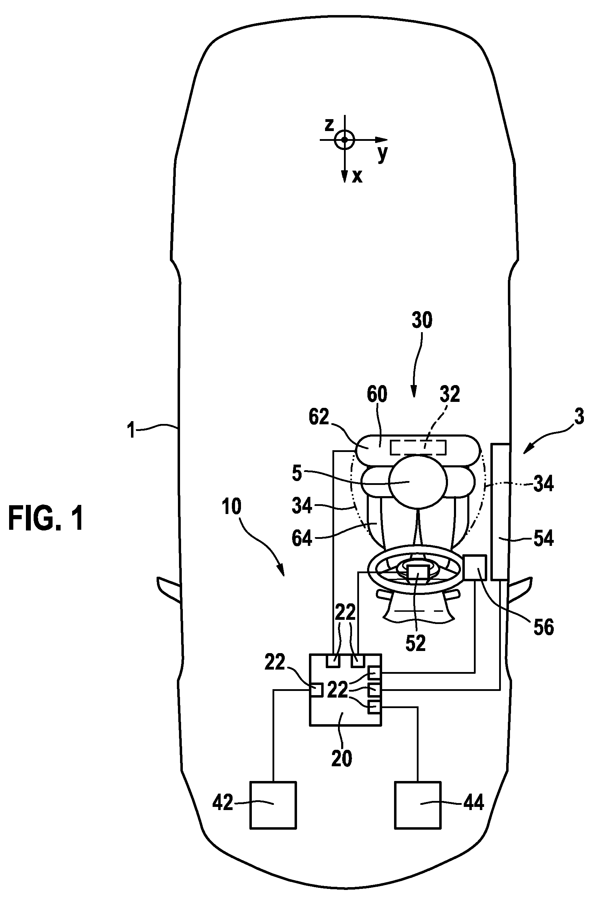

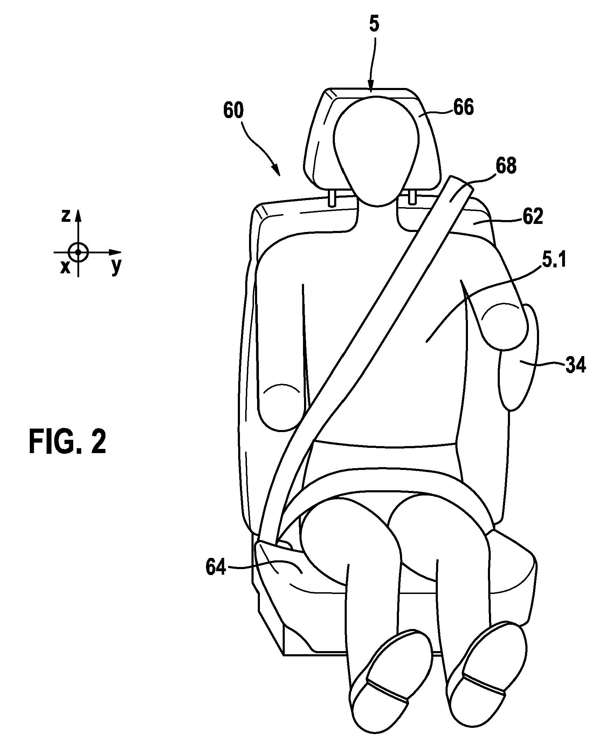

In Fig. 1 ist zur übersichtlichen Darstellung der Erfindung im Zusammenwirken mit weiteren Komponenten ein Insassenschutzsystems 10 eines Fahrzeugs 1 dargestellt, welches die Schutz- und Haltevorrichtung 30 zum Schutz eines Insassen 5 gemäß einem Ausführungsbeispiel der vorliegenden Erfindung umfasst. Das Insassenschutzsystem 10 umfasst beispielsweise mehrere Sensoreinheiten 42, 44, welche beispielsweise als Umfeldsensorik 42 zur Erfassung einer Umgebungssituation, die beispielsweise Radarsensoren, Kameras, Ultraschallsensoren usw. zur Erfassung einer Annäherung eines Fremd-Fahrzeugs umfasst, und/oder als Crashsensorik 44 zur Erfassung eines Stoßes bei einem Aufprall des Fremd-Fahrzeugs auf das (Ego-) Fahrzeug 1 ausgeführt sind, welche beispielsweise Beschleunigungssensoren, kapazitive Sensoren, Up-Front-Sensoren, Drucksensoren usw. umfasst. Die Sensoreinheiten 42, 44 erfassen korrespondierende physikalische Größen, und stellen diese repräsentierende Signale über mindestens eine Schnittstelle 22 einer Auswerte- und Steuereinheit 20 zur Verfügung. Im dargestellten Ausführungsbeispiel sind die verschiedenen Sensoren in einem Crashsensorikblock 44 zusammengefasst, wobei die einzelnen Sensoren an verschiedenen Stellen im Fahrzeug angeordnet sein können. Sensoren zur Erfassung eines Seitencrashs sind typischer Weise in der B-Säule oder nahe dem Fahrzeugschwerpunkt angeordnet. Die Auswerte- Steuereinheit 20 wertet die empfangenen Signale aus und erzeugt korrespondierende Steuersignale für Sicherheitsmittel des Insassenschutzsystems 10. Als Sicherheitsmittel können beispielsweise, je nach erforderlicher Situation, ein Frontairbag 52 in einem Lenkrad und/oder aus der Instrumentenkonsole des Fahrzeugs 1, ein Seitenairbag 54 in einer Türe und/oder einem Insassensitz 60 des Fahrzeugs 1 und/oder ein Kopfairbag 56 in einem Dachholm des Fahrzeugs 1 ausgelöst werden, um einen Aufprall des Fahrzeuginsassen 5 an entsprechenden Strukturelementen des Fahrzeugs 1 zu verhindern. Zudem verhindert die Schutz- und Haltevorrichtung 30 ein Wegrutschen des Fahrzeuginsassen 5 aus dem Fahrzeugsitz 60. Dazu umfasst die Schutz- und Haltevorrichtung 30 mindestens ein Haltemittel 34, welches von einem Antrieb 32 seitlich zum Fahrzeugsitz 60 ausgefahren wird und den Fahrzeuginsassen 5 in einer optimalen Position für die Airbags 52, 54, 56 hält, damit der Fahrzeuginsasse 5 möglichst zentral und optimal ausgerichtet in die entsprechenden aufgeblasen Airbags 52, 54, 56 fällt und ein seitliches Abrutschen von den entsprechenden Airbags 52, 54, 56 vermieden werden kann. Die Haltemittel 34 können beispielsweise in Form einer Fahrzeugsitzseitenwange in der Sitzlehne 62, wie aus Fig. 2 ersichtlich ist, und/oder der Sitzfläche 64 realisiert sein, die vor dem eigentlichen Aufprall eines Fremdfahrzeugs auf das eigene Fahrzeug 1 ausgefahren werden, so dass der laterale Seitenhalt des Insassen 5 verbessert wird.

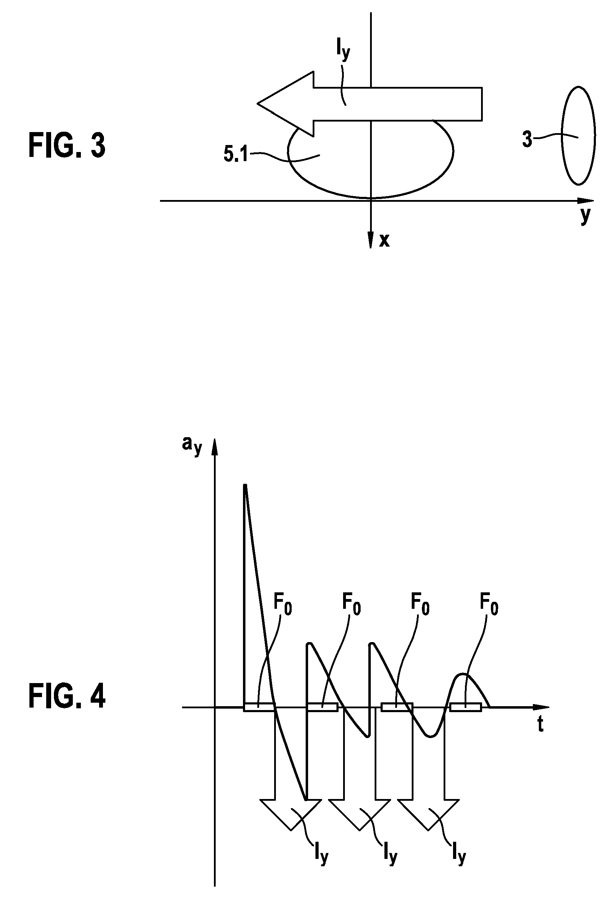

Wie aus Fig. 2 oder 3 weiter ersichtlich ist, bewirken die verstellbaren Haltemittel 34 in Abhängigkeit von Beschleunigungen a_{y} in Richtung einer Fahrzeugquerachse y eine Seitenabstützung des Insassen 5. Hierzu werden die Haltemittel 34 im Bedarfsfall je nach Anforderung aus dem Insassensitz 60 ausgefahren oder wieder in den Insassensitz 60 eingefahren.

Erfindungsgemäß erzeugt die Auswerte- Steuereinheit 20 in Abhängigkeit von der aktuellen Fahrsituation einen Positionierungsimpuls l_{y} und gibt diesen über mindestens eine Schnittstelle 22 an die Schutz- und Haltevorrichtung 30 aus, um den Insassen 5 weg von einer Fahrzeugseitenstruktur 3 in Richtung Fahrzeugmitte zu beschleunigen, wenn die Auswerte- Steuereinheit 20 eine vorgegebene Precrashsituation erkannt hat. Die Auswerte- Steuereinheit 20 erkennt die vorgegebene Precrashsituation beispielsweise dann, wenn eine ermittelte verbleibende Zeitdauer bis zu einem bevorstehenden Seitenaufprall einen vorgegebenen Schwellwert unterschreitet. Der an die Schutz- und Haltevorrichtung 30 ausgegebene Positionierungsimpuls ly wird über den Antrieb 32 und ein zwischen dem Insassen 5 und der Fahrzeugseitenstruktur 3 angeordnetes verstellbares Haltemittel 34 an den Insassen 5 weitergeleitet, so dass der Insasse 5 weg von der Fahrzeugseitenstruktur 3 in Richtung Fahrzeugmitte bewegt wird. Das mindestens eine Haltemittel 34 ist vorzugsweise so ausgeführt, dass es den Positionierungsimpuls l_{y} im Bereich des Thorax 5.1 auf den Insassen 5 überleitet. Dieser Ansatzpunkt ermöglicht in vorteilhafter Weise einen optimalen Hebel und die Biomechanik des Menschen erlaubt hier einen positionierenden Eingriff, um den Insassen 5 in Richtung Fahrzeugmitte zu bewegen.

Die Auswerte- Steuereinheit 20 ermittelt in Abhängigkeit von physikalischen Größen, welche von der mindestens einen Sensoreinheit 42, 44 erfasst werden, eine aktuelle Fahrsituation und aktuell wirkende Beschleunigungen a_{y}, wobei die Auswerte- Steuereinheit 20 in Abhängigkeit von ermittelten Beschleunigungen a_{y} in Richtung der Fahrzeugquerachse y über entsprechende Steuersingale an die Schutz- und Haltevorrichtung 30 die Seitenabstützung des Insassen 5 bewirkt. Zur Verbesserung der Effektivität erzeugt die Auswerte- Steuereinheit 20 den Positionierungsimpuls l_{y} in Abhängigkeit von der ermittelten lateralen Beschleunigung a_{y} phasenrichtig, wenn gegen den Positionierungsimpuls l_{y} wirkende Kräfte einen vorgegebenen Schwellwert unterschreiten, wobei die Auswerte- Steuereinheit 20 die wirkenden Kräfte durch Auswertung der erfassten physikalischen Größen ermittelt. Ein mögliches Reaktionsmuster ist beispielhaft in Fig. 4 dargestellt.

Wie aus Fig. 4 weiter ersichtlich ist, erzeugt die Auswerte- Steuereinheit 20 keine Positionierungsimpulse l_{y}, wenn beispielsweise aufgrund eines Fahrmanövers eine positive laterale Beschleunigung a_{y} des Fahrzeugs 1 ermittelt wird, d.h. der Insasse 5 wird in Richtung der Fahrzeugseitenstruktur 3 bewegt. Um dieser Bewegung entgegen zu wirken, stellt die Auswerte- Steuereinheit 20 während dieser Zeiträume über den Antrieb 32 und die Haltemittel 34 eine vorgegebene Haltekraft F₀ zur Verfügung, um den Insassen 5 in Position zu halten. Wie aus Fig. 4 weiter ersichtlich ist, erzeugt die Auswerte- Steuereinheit 20 Positionierungsimpulse l_{y}, wenn keine dem Positionierungsimpuls l_{y} entgegenwirkende Kraft bzw. keine positive laterale Beschleunigung a_{y} des Fahrzeugs 1 ermittelt wird, d.h. der Insasse 5 wird weg von der Fahrzeugseitenstruktur 3 in Richtung Fahrzeugmitte bewegt.

Die Schutz- und Haltevorrichtung 30, welche auch als ESA (Enveloping Side Adjustment = einschließende Seiten-Anpassung) bezeichnet wird, ermöglicht speziell zusammen mit bereits vorhandenen Rückhaltesystemen eine Wirkungsverbesserung dieser Rückhaltesysteme. Als Rückhaltemittel des dargestellten Insassenschutzsystems 10 sind der Insassensitz 60 mit Sitzlehne 62, Sitzfläche 64 und Kopfstütze 66, ein Sicherheitsgurt 68, der Frontairbag 52, der Seitenairbag 54 und der Kopfairbag 56 sowie die Schutz- und Haltevorrichtung 30 vorgesehen. Die Wirkung der Schutz- und Haltevorrichtung 30 wird durch den Gurt 68 unterstützt und hemmt sehr stark eine laterale Insassenbewegung zur Einschlagseite des Fremd-Fahrzeugs auch der Gurt 68 hemmt in einer gewissen Weise die laterale Insassenbewegungen, jedoch nicht so stark wie die Schutz- und Haltevorrichtung 30. Eine solche laterale Insassenbewegung würde eine Überlebenszone deutlich verkleinern, so dass die effektive Wirkung des Seitenairbags 54, insbesondere dessen wirksames Volumen, beschränkt wird, wobei jedoch ein großer Airbag die Überlebenszone vergrößern würde. Eine große Überlebenszone und auch ein großes Airbagvolumen reduzieren jedoch die Verletzungsschwere. Die Einführung der Schutz- und Haltevorrichtung 30 mit dem erfindungsgemäßen Positionierungsimpuls l_{y} führt somit über die Hemmung der lateralen Insassenbewegung in Richtung Fahrzeugseitenstruktur 3 bzw. einer erzeugten lateralen Insassenbewegung in Richtung Fahrzeugmitte zu einer verbesserten Schutzwirkung durch die übrigen Rückhaltemittel. Hinzu kommt die verringerte Aufprallgeschwindigkeit des Insassen auf die Seitenstruktur.

Im Komfortbetrieb kann ein Antrieb 32 von Haltemitteln 24 der Schutz- und Haltevorrichtung 30 vom Insassen 5 manuell oder aber auch automatisiert oder teilautomatisiert an die Erfordernisse eines komfortablen Fahrens angepasst werden. Als Beispiel kann ein fahrdynamischer Seitenhalt oder eine aktive Lehnenbreitenverstellung bei bekannten Fahrzeugen der Oberklasse angeführt werden, die ebenfalls bei Fahrzeugsitzen mit der Haltevorrichtung eingesetzt werden können. Im Falle einer Precrash-Detektion, d.h. einer Detektion eines unmittelbar bevorstehenden Unfalls bevor der eigentliche Unfall stattgefunden hat, werden die Seitenwangen als Haltemittel 34 der Schutz- und Haltevorrichtung 30 des Insassensitzes 60 in einer Weise ausgefahren, dass der Insasse 5 nicht aus dem Sitz herausgeschoben wird, sondern vielmehr eine zusätzliche seitliche Abstützung erfährt. Das Verfahren erfolgt in einer oder in mehreren Phasen. So können die in den Insassensitz 60 integrierten Haltemittel 34 gemeinsam oder, je nach Gefahrensituation, auch einzeln durch den Antrieb 32 verfahren bzw. bewegt werden, um den Insassen 5 seitlich abzustützen. In einer weiteren Phase wird dann der Positionierungsimpuls l_{y} zu geeigneten Zeitpunkten erzeugt, um den Insassen 5 in Richtung Fahrzeugmitte zu bewegen. Der Antrieb 32 kann eine elektromotorische oder pneumatische Einheit sein, welche die Haltemittel 34 in verschiedene Richtungen bewegen und verstellen kann. Als Aktuatoren des Antriebs 32 sind grundsätzlich alle geeigneten Maschinenelemente einzeln oder in Kombination denkbar wie beispielsweise ein Elektromotor mit Zahnstange/Kurvenscheibe, pneumatische Zylinder und/oder Blasen, Federelemente mit elektromagnetischer oder einem anderen Auslösemechanismus.

Ausführungsformen der vorliegenden Erfindung können als Schaltung, Vorrichtung, Verfahren, Datenverarbeitungsprogramm mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden. Zudem kann die vorliegende Erfindung als Computerprogrammprodukt auf einem computernutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können.

Die computernutzbaren oder computerlesbaren Medien können beispielsweise elektronische, magnetische, optische, elektromagnetische Infrarot- oder Halbleitersysteme, Vorrichtungen, Geräte oder Verbreitungsmedien umfassen. Zudem können die computerlesbaren Medien eine elektrische Verbindung mit einer oder mehreren Leitungen, eine tragbare Computerdiskette, einen Speicher mit direktem Zugriff (RAM), einen Nur-Lese-Speicher (ROM), einen löschbaren und programmierbaren Nur-Lese-Speicher (EPROM oder Flashspeicher, eine optischen Leitung und eine tragbare CD-ROM umfassen. Das computernutzbare oder das computerlesbare Medium kann sogar Papier oder ein anderes geeignetes Medium sein, auf welchem das Programm geschrieben ist, und von welchem es, beispielsweise durch einen optischen Abtastvorgang des Papiers oder des anderen Mediums elektrisch erfassbar ist, dann kompiliert, interpretiert oder falls erforderlich auf andere Weise verarbeitet und dann im Computerspeicher gespeichert werden kann.

Ausführungsformen der Erfindung stellen in vorteilhafter Weise effizientes elektromotorisches System zur Verfügung, welches einen Positionierungspuls generieren kann, welcher am Thorax (Oberkörper) des Insassen wirkt. Ausführungsformen der Erfindung können als Erweiterung des ESA-Systems angesehen werden. Die einfachste direkte Umsetzung ist eine Aktivierung des Positionierungsimpuls in Abhängigkeit der Fahrzeugsituation: Besteht eine gefährliche Precrashsituation, in der der Fahrer aufgrund der kleinen Zeitspanne bis zum bevorstehenden Seitenaufpralls oder der Fahrphysik keine Eingriffsmöglichkeiten hat, wird der Positionierungspuls aktiviert und beschleunigt den Insassen in Richtung Fahrzeugmitte. Die Funktionalität kann in vorteilhafter Weise dadurch erweitert werden, dass die laterale Beschleunigung des Fahrzeugs erfasst und ausgewertet wird, um einen Positionierungsimpuls zu erteilen, der dem Insassen eine möglichst hohe Geschwindigkeit weg von der Seitenstruktur in Richtung Fahrzeugmitte verleiht. Daher wird der Positionierungsimpuls "phasenrichtig" erzeugt und der Thorax des Insassen durch die Haltemittemittel dann beschleunigt, wenn keine Kräfte herrschen, die diese Beschleunigung in Richtung Fahrzeugmitte nennenswert hemmen.

## Patentansprüche

1. Verfahren zum Schützen und Halten eines Insassen auf einem Insassensitz eines Fahrzeugs bei einem Unfall unter Zuhilfenahme mindestens eines Haltemittels (34) einer Schutz- und Haltevorrichtung (30), wobei in Abhängigkeit von einer ermittelten aktuellen Fahrsituation ein Positionierungsimpuls (l_{y}) erzeugt wird, welcher den Insassen (5) weg von einer Fahrzeugseitenstruktur (3) in Richtung Fahrzeugmitte beschleunigt, wenn eine vorgegebene Precrashsituation erkannt wird, **dadurch gekennzeichnet, dass** der Positionierungsimpuls (l_{y}) in Abhängigkeit von einer ermittelten lateralen Beschleunigung (a_{y}) phasenrichtig dann erzeugt wird, wenn gegen den Positionierungsimpuls (l_{y}) wirkende Kräfte einen vorgegebenen Schwellwert unterschreiten.

2. Verfahren nach Anspruch 1, **dadurch gekennzeichnet, dass** die vorgegebene Precrashsituation erkannt wird, wenn eine ermittelte verbleibende Zeitdauer bis zu einem bevorstehenden Seitenaufprall einen vorgegebenen Schwellwert unterschreitet.

3. Verfahren nach einem der Ansprüche 1 bis 2, **dadurch gekennzeichnet, dass** der Positionierungsimpuls (l_{y}) über ein zwischen dem Insassen (5) und der Fahrzeugseitenstruktur (3) angeordnetes Haltemittel (34) auf den Insassen (5) übergeleitet wird, wobei das mindestens eine Haltemittel (34) im Fahrzeug (1) in Abhängigkeit der ermittelten aktuellen Fahrsituation derart bewegt wird, dass der Insasse (5) in Abhängigkeit von Beschleunigungen (a y) in Richtung einer Fahrzeugquerachse (y) eine Seitenabstützung erfährt, wobei vor dem Überleiten des Positionierungsimpulses (l_{y}) durch das mindestens eine Haltemittel (34) eine mechanische Haltekraft (F₀) auf den Insassen (5) ausgeübt wird, welcher gegen das mindestens eine Haltemittel (34) drückt.

4. Auswerte- und Steuereinheit für eine Schutz- und Haltevorrichtung zum Schutz eines Insassen (5) auf einem Insassensitz (60) eines Fahrzeugs (1) bei einem Unfall, zur Durchführung des Verfahrens nach einem der Ansprüche 1 bis 3.

5. Auswerte- und Steuereinheit nach Anspruch 4, dadurch gekenn- zeichnet, dass die Auswerte- und Steuereinheit (20) in Abhängigkeit von ermittelten Beschleunigungen (a_{y}) in Richtung einer Fahrzeugquerachse (y) über entsprechende Steuersignale an die mindestens eine Schutz- und Haltevorrichtung (30) eine Seitenabstützung des Insassen (5) bewirkt.

6. Schutz- und Haltevorrichtung zum Schutz eines Insassen auf einem Insassensitz eines Fahrzeugs bei einem Unfall mit mindestens einem verstellbaren Haltemittel (34), welches in Abhängigkeit von Beschleunigungen (a_{y}) in Richtung einer Fahrzeugquerachse (y) eine Seitenabstützung des Insassen (5) bewirkt, wobei das mindestens eine Haltemittel (34) in den Insassensitz (60) integriert und im Bedarfsfall je nach Anforderung aus dem Insassensitz (60) aus- oder einfahrbar ist, **gekennzeichnet durch** eine Auswerte- und Steuereinheit (20) nach einem der Ansprüche 4 oder 5, wobei der Positionierungsimpuls (l_{y}) über ein zwischen dem Insassen (5) und der Fahrzeugseitenstruktur (3) angeordnetes verstellbares Haltemittel (34) auf den Insassen (5) wirkt.

7. Schutz- und Haltevorrichtung nach Anspruch 6, **dadurch gekennzeichnet, dass** das mindestens eine Haltemittel (34) durch Ansteuerung von mindestens einer Antriebseinrichtung (32) verstellbar ist, wobei die mindestens eine Antriebseinrichtung (32) als elektrische und/oder mechanische und/oder pyrotechnische und/oder pneumatische und/oder hydraulische Einheit ausgeführt ist.

8. Schutz- und Haltevorrichtung nach Anspruch 6 oder 7, **dadurch gekennzeichnet, dass** das mindestens eine Haltemittel (34) so ausgeführt ist, dass es den Positionierungsimpuls (l_{y}) i m Bereich des Thorax (5.1) auf den Insassen (5) überleitet.

9. Computerprogramm mit Programmcodemitteln zur Ausführung des Verfahrens nach einem der Ansprüche 1 bis 3, wenn das Computerprogramm von einer Auswerte- und Steuereinheit (20) ausgeführt und/oder angesteuert wird.

10. Computerprogrammprodukt mit Programmcodemitteln, welche in einem computerlesbaren Medium gespeichert sind, um das Verfahren nach einem der Ansprüche 1 bis 3 durchzuführen, wenn das Computerprogrammprodukt von einer Auswerte- und Steuereinheit (20) ausgeführt und/oder angesteuert wird.

## Claims

1. Method for protecting and retaining an occupant on an occupant seat in a vehicle in the case of a crash, with the aid of at least one retaining means (34) of a protection and retention apparatus (30), wherein a positioning pulse (I_{y}) is generated in a manner dependent on an established current driving situation, said positioning pulse accelerating the occupant (5) away from a vehicle side structure (3) in the direction of the vehicle centre if a predetermined pre-crash situation is identified, **characterized in that** the positioning pulse (I_{y}) is generated with the correct phase in a manner dependent on an established lateral acceleration (a_{y}) when forces acting against the positioning pulse (I_{y}) drop below a predetermined threshold.

2. Method according to Claim 1, **characterized in that** the predetermined pre-crash situation is identified if an established remaining time interval up to an imminent side impact drops below a predetermined threshold.

3. Method according to either of Claims 1 and 2, **characterized in that** the positioning pulse (I_{y}) is transferred to the occupant (5) by way of a retaining means (34) arranged between the occupant (5) and the vehicle side structure (3), the at least one retaining means (34) in the vehicle (1) being moved in a manner dependent on the established current driving situation in such a way that the occupant (5) experiences a lateral support in a manner dependent on accelerations (a_{y}) in the direction of a vehicle transverse axis (y), with a mechanical retention force (F₀) being exerted on the occupant (5), who is pressing against the at least one retaining means (34), prior to the transfer of the positioning pulse (I_{y}) by the at least one retaining means (34).

4. Evaluation and control unit for a protection and retention apparatus for protecting an occupant (5) on an occupant seat (60) in a vehicle (1) in the case of a crash, for carrying out the method according to one of Claims 1 to 3.

5. Evaluation and control unit according to Claim 4, **characterized in that** the evaluation and control unit (20), in a manner dependent on established accelerations (a_{y}) in the direction of a vehicle transverse axis (y), brings about a lateral support of the occupant (5) by way of appropriate control signals to the at least one protection and retention apparatus (30).

6. Protection and retention apparatus for protecting an occupant on an occupant seat in a vehicle in the case of a crash, comprising at least one adjustable retaining means (34), which, in a manner dependent on accelerations (a_{y}) in the direction of a vehicle transverse axis (y), brings about a lateral support of the occupant (5), the at least one retaining means (34) being integrated into the occupant seat (60) and, depending on the requirements, being extendable out of, or retractable into, the occupant seat (60) when needed, **characterized by** an evaluation and control unit (20) according to either of Claims 4 and 5, wherein the positioning pulse (I_{y}) acts on the occupant (5) by way of an adjustable retaining means (34) arranged between the occupant (5) and the vehicle side structure (3).

7. Protection and retention apparatus according to Claim 6, **characterized in that** the at least one retaining means (34) is adjustable by actuation by at least one drive device (32), the at least one drive device (32) being embodied as an electrical and/or mechanical and/or pyrotechnical and/or pneumatic and/or hydraulic unit.

8. Protection and retention apparatus according to Claim 6 or 7, **characterized in that** the at least one retaining means (34) is configured in such a way that it transfers the positioning pulse (I_{y}) onto the occupant (5) in the region of the thorax (5.1).

9. Computer program comprising program code means for executing the method according to one of Claims 1 to 3 when the computer program is executed and/or actuated by an evaluation and control unit (20).

10. Computer program product comprising program code means which are stored in a computer readable medium in order to carry out the method according to one of Claims 1 to 3 when the computer program product is executed and/or actuated by an evaluation and control unit (20).

## Revendications

1. Procédé pour la protection et le maintien d'un occupant assis sur un siège d'un véhicule en cas d'accident à l'aide d'au moins un moyen de maintien (34) d'un dispositif de protection et de maintien (30), dans lequel une impulsion de positionnement (I_{y}) est générée en fonction d'une situation de conduite actuelle déterminée, laquelle impulsion accélère l'occupant (5) en l'éloignant d'une structure latérale (3) du véhicule vers le milieu du véhicule lorsqu'une situation de pré-collision prédéterminée est détectée, **caractérisé en ce que** l'impulsion de positionnement (I_{y}) n'est générée en phase en fonction d'une accélération (a_{y}) latérale déterminée que lorsque des forces opposées à l'impulsion de positionnement (I_{y}) s'abaissent en dessous d'une valeur de seuil prédéterminée.

2. Procédé selon la revendication 1, **caractérisé en ce que** la situation de pré-collision prédéterminée est détectée lorsqu'un intervalle de temps déterminé s'écoulant jusqu'à un choc latéral imminent s'abaisse en dessous d'une valeur de seuil prédéterminée.

3. Procédé selon l'une quelconque des revendications 1 à 2, **caractérisé en ce que** l'impulsion de positionnement (I_{y}) est tamise à l'occupant (5) par l'intermédiaire d'un moyen de maintien (34) disposé entre l'occupant (5) et la structure latérale de véhicule (3), dans lequel l'au moins un moyen de maintien (34) est déplacé dans le véhicule (1) en fonction de la situation de conduite actuelle déterminée de manière à ce que l'occupant (5) soit soumis à un support latéral en fonction d'accélérations (a_{y}) orientées vers un axe transversal (y) du véhicule, dans lequel, avant la transmission de l'impulsion de positionnement (I_{y}) par l'intermédiaire de l'au moins un moyen de maintien (34), une force de maintien (F₀) mécanique est exercée sur l'occupant (5), laquelle force appuie sur l'au moins un moyen de maintien (34).

4. Unité d'évaluation et de commande destinée à un dispositif de protection et de maintien pour protéger un occupant (5) assis sur un siège (60) d'un véhicule (1) en cas d'accident, destinée à mettre en oeuvre le procédé selon l'une quelconque des revendications 1 à 3.

5. Unité d'évaluation et de commande selon la revendication 4, **caractérisée en ce que** l'unité d'évaluation et de commande (20) soumet l'occupant (5) à un support latéral en fonction d'accélérations déterminées (a_{y}) orientées vers un axe transversal de véhicule (y) par l'intermédiaire de signaux de commande correspondants envoyés à l'au moins un dispositif de protection et de maintien (30).

6. Dispositif de protection et de maintien destiné à protéger un occupant assis sur un siège d'un véhicule en cas d'accident, comportant au moins un moyen de maintien réglable (34) qui soumet l'occupant (5) à un support latéral en fonction d'accélérations (a_{y}) orientées vers un axe transversal du véhicule (y), dans lequel l'au moins un moyen de maintien (34) est intégré dans le siège (60) et peut le cas échéant être sorti du siège (60) ou y être rétracté selon les nécessités, **caractérisé par** une unité d'évaluation et de commande (20) selon l'une quelconque des revendications 4 ou 5, dans lequel l'impulsion de positionnement (I_{y}) agit sur l'occupant (5) par l'intermédiaire d'un moyen de maintien réglable (34) disposé entre l'occupant (5) et la structure latérale de véhicule (3).

7. Dispositif de protection et de maintien selon la revendication 6, caractérisé en ce ce que l'au moins un moyen de maintien (34) est réglable par commande d'au moins un moyen d'entraînement (32), dans lequel l'au moins un moyen d'entraînement (32) est réalisé sous la forme d'une unité électrique et/ou mécanique et/ou pyrotechnique et/ou pneumatique et/ou hydraulique.

8. Dispositif de protection et de maintien selon la revendication 6 ou 7, **caractérisé en ce que** l'au moins un moyen de maintien (34) est réalisé de manière à ce qu'il transmette à l'occupant (5) l'impulsion de positionnement (I_{y}) dans la région du thorax (5.1).

9. Programme d'ordinateur comportant des moyens de code de programme destinés à mettre en oeuvre le procédé selon l'une quelconque des revendications 1 à 3 lorsque le programme d'ordinateur est exécuté et/ou est piloté par une unité d'évaluation et de commande (20).

10. Produit de programme informatique comportant des moyens de code de programme qui sont stockés sur un support lisible par ordinateur pour mettre en oeuvre le procédé selon l'une quelconque des revendications 1 à 3 lorsque le produit de programme d'ordinateur est exécuté et/ou est piloté par une unité d'évaluation et de commande (20).
